# EUROPEAN PATENT APPLICATION

(11) **EP 3 733 801 A1**
(43) Date of publication of application: **04.11.2020**
(21) Application number: 18894406.0
(22) Date of filing: 25.12.2018
(51) Int. Cl.: C09D 183/16, B05D 7/24

(54) **COATING FILM FORMING COMPOSITION**

(30) Priority: 26.12.2017 JP 2017248704
(71) Applicant: ThreeBond Co., Ltd., Tokyo 192-0398 (JP)
(72) Inventor: KISHI, Katsuhiko, Hachioji-shi, Tokyo 192-0398 (JP); KIRINO, Manabu, Hachioji-shi, Tokyo 192-0398 (JP)
(74) Representative: Petty, Catrin Helen
(86) International application number: PCT/JP2018/047590
(87) International publication number: WO 2019/131641

(57) **Abstract**

A coat-forming composition according to the present invention can form a coating film having excellent water repellency, water slidability, and the like, and is useful because the coat-forming composition can provide a coating layer by being applied to, for example, a substrate such as various metal steel sheets, a coated metal steel sheet, glass, ceramics, a resin, or the like.

A coat-forming composition containing:
per 100 parts by mass of component (A): a polysilazane compound,
10 to 90 parts by mass of component (B): a reactive silicone oil having a functional group selected from a carbinol group, an amino group, an epoxy group, and a mercapto group only at one end of a molecular chain;
250 to 2500 parts by mass of component (C): a solvent or a diluent; and
a catalytic amount of component (D): a hydrolysis catalyst.

## Description

### TECHNICAL FIELD

The present invention relates to a coat-forming composition containing a polysilazane compound as a main component and capable of forming a cured coating film having excellent water repellency and water slidability.

### BACKGROUND ART

To a coated steel sheet of an automobile body or the like, coating and application of a solid, semi-solid, or liquid coat-forming composition has been conventionally performed for the purposes of protection and improvement of aesthetic appearance. As such a coat-forming composition, for example, a composition obtained by adding a volatile organopolysiloxane oil and a volatile dimethylpolysiloxane to a moisture-curable organopolysiloxane, an organic solvent, and a hydrolysis catalyst (Patent Literature 1), and a composition obtained by adding a high-viscosity silicone gum to a moisture-curable organopolysiloxane, an organic solvent, and a hydrolysis catalyst (Patent Literature 2) are known. However, in these compositions, a non-reactive organopolysiloxane oil is volatilized and dissipated with time, and therefore it is difficult to exhibit water repellency and water slidability over a long period.

In order to solve the above problem, various compositions containing a reactive silicone such as a hydrolysis-curable silicone oligomer, or a silicone oil having a reactive functional group in a molecule, an organic solvent, and a hydrolysis catalyst have been proposed. Patent Literature 3 discloses a coating composition containing a combination of a water-curable silicone resin and specific hydrolysis curing agent components, an organic solvent, and polytetrafluoroethylene having a specific molecular weight. Patent Literature 4 discloses a surface water-repellent protective agent containing a combination of a moisture-curable liquid silicone oligomer, polydimethylsiloxane having silanol groups at both ends, a volatile solvent, and the like. Patent Literature 5 discloses a vehicle coating agent containing a combination of a silicone alkoxy oligomer, a silicone oil having a carbinol group at one end of a molecular chain, a specific organic solvent, a hydrolysis catalyst, and the like.

However, the composition of Patent Literature 3 contains only a water-curable silicone resin as a reactive polymer component, and still has a problem in durability of a coating film. The composition of Patent Literature 4 has improved durability because of also containing, as a reactive polymer component, polydimethylsiloxane having silanol groups at both ends in addition to the moisture-curable liquid silicone oligomer, but has a problem that water slidability (water sliding angle) is too large due to too large hydrophilicity. The composition of Patent Literature 5 has a disadvantage that compatibility of the entire system is low and separation or the like occurs during storage.

As a technique different from these, a coat-forming composition containing a polysilazane compound in a material for forming a glass-like, dense, and hard film having a small curing shrinkage is known. It is known from Patent Literature 6 that a polysilazane compound is generally converted into an organopolysiloxane by a hydrolysis reaction (sol-gel reaction) using water present in the air, and is cured to form a coating film. For such a material, a coating agent formed by mixing a combination of any one or more of reactive silicone oils having one end modified with a methoxy group, and reactive silicone oils having both ends modified with reactive groups selected from a silanol group, an amino group, a carbinol group, and a carboxyl group for the purpose of increasing water repellency has been proposed. However, even with such a composition, it is not possible to achieve both sufficient water repellency (that is, a sufficiently large water droplet contact angle) and sufficient water slidability (that is, a sufficiently small water droplet sliding angle).

### Citation List

### Patent Literatures

Patent Literature 1: JP 10-36771 A
Patent Literature 2: JP 2013-194058 A
Patent Literature 3: JP 2007-270071 A
Patent Literature 4: JP 2009-138063 A
Patent Literature 5: JP 2014-065771 A
Patent Literature 6: JP 2014-139301 A

### SUMMARY OF INVENTION

In a conventional coat-forming composition containing a polysilazane compound as a main component, it is difficult to achieve both excellent water repellency (that is, a sufficiently large water droplet contact angle) and excellent water slidability (that is, a sufficiently small water droplet sliding angle).

In the present invention, as a result of intensive studies to solve the above problem, it has been found that the present invention can be achieved by using a coat-forming composition having the following configuration. That is, a first embodiment of the present invention is a coat-forming composition containing the following components (A) to (D).

Per 100 parts by mass of component (A): a polysilazane compound,
10 to 90 parts by mass of component (B): a reactive silicone oil having a functional group selected from a carbinol group, an amino group, an epoxy group, and a mercapto group only at one end of a molecular chain;
250 to 2500 parts by mass of component (C): a solvent or a diluent; and
a catalytic amount of component (D) : a hydrolysis catalyst.

The present invention also includes the following embodiments.

A second embodiment is the coat-forming composition according to the first embodiment, in which the functional group of the component (B) is a carbinol group.

A third embodiment is the coat-forming composition according to the first or second embodiment, in which the component (D) contains an amine compound.

A fourth embodiment is the coat-forming composition according to any one of the first to third embodiments, in which the component (A) contains an organic polysilazane.

A fifth embodiment is a coating agent containing the coat-forming composition according to any one of the first to fourth embodiments.

A sixth embodiment is a coating film forming method including: applying the coat-forming composition according to any one of the first to fourth embodiments to a surface of a substrate; and curing the coat-forming composition on the substrate by a hydrolysis reaction.

### DESCRIPTION OF EMBODIMENTS

Hereinafter, details of the present invention will be described.

### <Component (A): polysilazane compound>

The component (A) contained in the coat-forming composition of the present invention is a polysilazane compound. The polysilazane compound used in the present invention is not particularly limited as long as being a compound having a repeating structure of - (SiR₁R₂-NR₃) - in a molecule, and a compound having a chain structure, a cyclic structure, or a structure in which molecules are crosslinked to each other can be used. In addition, the compound may be used singly or as a mixture of a plurality of kinds thereof, and a compound copolymerized with another polymerizable compound may be used as long as the effect of the present invention is not impaired.

In the above formula, R₁, R₂, and R₃ each independently represent a hydrogen atom or an organic group selected from hydrocarbon groups optionally having a substituent, preferably a hydrogen atom or an organic group selected from hydrocarbon groups having 1 to 6 carbon atoms and optionally having a substituent, more preferably a hydrogen atom or an organic group selected from aliphatic hydrocarbon groups having 1 to 4 carbon atoms. Here, in the above formula, a compound in which all of R₁, R₂, and R₃ represent hydrogen atoms is generally referred to as an inorganic polysilazane or a perhydropolysilazane, and a compound containing an organic group as any one of R₁, R₂, and R₃ is generally referred to as an organic polysilazane or an organopolysilazane. In the present invention, both an organic polysilazane and an inorganic polysilazane can be used. These may be used as a mixture, and can be appropriately selected according to characteristics required for a cured product. For example, a composition containing a large amount of inorganic polysilazane can be prepared when a high degree of hardness is required for a cured product, a composition containing a large amount of organic polysilazane can be prepared when flexibility is required, or the like. In addition, polymetallosilazane which is a modified polysilazane obtained by replacing a part of R₁ and R₂ with a metal atom may be used. In the present invention, preferably, it is more desirable to contain an organic polysilazane mainly from a viewpoint of softness and flexibility required for use in coating.

It is known that a polysilazane compound is converted into a polysiloxane by causing a sol-gel reaction when being in contact with water in the air. The polysiloxane layer is formed on an adherend, and thereby becomes a main component of a coating film having excellent water resistance, oil resistance, impact resistance, and the like. At this time, nitrogen in a molecule is eliminated to generate ammonia, which serves as a catalyst to further promote the reaction. In the reaction, a Si-N bond is changed to a Si-O bond, and the reaction is characterized in that curing shrinkage caused by generation of a leaving group and a reduction in interatomic distance hardly occurs unlike crosslinking between alkoxysilane molecules. The reaction can reduce generation of cracks, which is a drawback of polysiloxane coating film formation by a sol-gel reaction, and therefore can form a coating film with excellent followability even on an uneven substrate.

As a commercially available polysilazane compound that can be used in the present invention, TRESMILE ANN110, ANN120-10, ANN120-20, ANN310, ANN320, ANL110A, ANL120A, ANL120-20, ANL150A, ANP110, ANP140-01, ANP140-02, ANP140-03, ASP140, KiONHTT1880, KiON HTA1500 rapid cure, KiON HTA1500 slow cure, tutuProm matt HD, tutuProm bright G, CAG37, and tutuProm bright, manufactured by AZ Electronic Materials, and the like can be used.

### <Component (B) : a reactive silicone oil having a functional group selected from a carbinol group, an amino group, an epoxy group, and a mercapto group only at one end of a molecular chain>

The component (B) is a reactive silicone oil having a functional group selected from a carbinol group, an amino group, an epoxy group, and a mercapto group only at one end of a molecular chain. This component is a component necessary for enhancing water repellency and water slidability in a cured coating film formed by the coat-forming composition of the present invention. Note that in general, the reactive silicone oil means a compound obtained by introducing various reactive functional groups into some silicon atoms of a dimethyl silicone oil, a methylphenyl silicone oil, or a methyl hydrogen silicone oil, that is, a straight silicone oil, and modifying the functional groups. However, in the present invention, a substance having the reactive functional group only at one end of a molecular chain of the straight silicone oil corresponds to the reactive silicone oil. Here, the carbinol group means an organic group having a hydroxy group linked to a hydrocarbon group. In addition, the amino group, the epoxy group, and the mercapto group may be directly linked to a silicon atom at one end of a molecular chain of the silicone oil, or may be linked to a hydrocarbon group extended from the silicon atom. As the hydrocarbon group in each of the above cases, a methylene group, an ethylene group, a propylene group, a butylene group, and a hydrocarbon group having a substituent selected from a methyl group and an ethyl group on a side chain of each of the methylene group, the ethylene group, the propylene group, and the butylene group, and having 10 or less carbon atoms as a whole are preferable. Note that a substance further having a non-reactive organic group in a molecular chain of the silicone oil, for example, on a side chain, another end, or the like may be contained in the coat-forming composition of the present invention as long as the effect of the present invention is not impaired.

The reactive functional group in the present invention is a functional group selected from a carbinol group, an amino group, an epoxy group, and a mercapto group. When the component (B) has the functional group, the coat-forming composition of the present invention can have water repellency and water slidability suitable for a cured coating film. A mechanism that exerts this effect is not clear, but the following mechanism is presumed. That is, the above functional group is contained at one end of a chain silicone oil. Therefore, the functional group can interact with a substrate made of metal or the like, and one end of the chain molecule is adsorbed on the substrate. This forms a layer of monomolecules arranged on a surface of the substrate to form a hydrophobic film, thereby exhibiting water slidability. It is presumed that by forming a network complementarily with a coating film containing the component (A) on the hydrophobic film, the coating film becomes a dense film to exhibit water repellency, thus exerting the effect of the present invention. Note that when the functional group is a carbinol group, water slidability is particularly excellent. Although a reason therefor is not clear, it is considered that when the component (B) has a structure having a carbinol group, a denser and stronger hydrophobic film can be formed on the substrate.

The content of the component (B) in the coat-forming composition of the present invention is within a range of 10 to 90 parts by mass, more preferably within a range of 20 to 80 parts by mass as a desirable range, and still more preferably within a range of 25 to 75 parts by mass as the most desirable range per 100 parts by mass of the component (A). When the content of the component (B) is within the above range, the coat-forming composition of the present invention can exhibit particularly excellent water repellency and water slidability.

Examples of a commercially available product of the component (B) that can be used in the present invention include: X-22-170BX (functional group equivalent 2800 g/mol) and X-22-170DX (functional group equivalent 4700 g/mol), as a product in which the reactive functional group is a carbinol group, manufactured by Shin-Etsu Chemical Co., Ltd.; TSF-4700 (functional group equivalent 3000 g/mol, an amino group is linked to one end as an aminoalkyl group) and TSF-4701 (functional group equivalent 2500 g/mol, an amino group is linked to one end as an aminoalkyl group), as a product in which the reactive functional group is an amino group, manufactured by Momentive Performance Materials Japan LLC; and X-22-173BX (functional group equivalent 2500 g/mol, epoxy group is linked to one end as an epoxyalkyl group) and X-22-173DX (functional group equivalent 4600 g/mol, an epoxy group is linked to one end as an epoxyalkyl group, as a product in which the reactive functional group is an epoxy group, manufactured by Shin-Etsu Chemical Co., Ltd.; and the like. These products may be used singly or in combination of a plurality of kinds thereof.

### <Component (C): solvent or diluent>

The component (C) contained in the coat-forming composition of the present invention is a solvent or a diluent. The solvent used herein means what can dissolve all the solutes contained in the coat-forming composition, and the diluent means what does not dissolve all the solutes but can disperse all the solutes uniformly. As the component (C) that can be used in the present invention, any substance that can dissolve or uniformly disperse all the solutes contained in the coat-forming composition, does not react with the solutes, and is liquid at 25°C can be appropriately used. Examples of the component (C) include a naphthene-based hydrocarbon and a halide thereof, a paraffin-based hydrocarbon and a halide thereof, an isoparaffin-based hydrocarbon and a halide thereof, an ether compound, an alcohol compound, a phenol compound, a glycol compound, a ketone compound, an ester compound, a crude oil fractionation component, and the like. Note that when a substance containing a compound that easily absorbs water into a system, such as a low-molecular alcohol, ether, or acetone, is selected, it is desirable to use the substance that is purified by distillation or the like to remove water as much as possible.

The solvent or diluent that can be used in the present invention can be appropriately selected depending on volatility and workability required for the coat-forming composition, and solubility and dispersibility with respect to a solute component. However, in the present invention, preferably, a ketone compound, an ester compound, an ether compound, an alcohol compound, a paraffin or isoparaffin-based hydrocarbon compound, and a crude oil fractionation component can be desirably used. Specific examples of the ketone compound include acetone, isopropyl ketone, methyl ethyl ketone, methyl isobutyl ketone, diisobutyl ketone, cyclohexanone, and the like. Specific examples of the ester compound include methyl acetate, ethyl acetate, propyl acetate, butyl acetate, methyl lactate, ethyl lactate, butyl lactate, and the like. Specific examples of the ether compound include diethyl ether, dibutyl ether, isopropyl ether, tetrahydrofuran, and 1,4-dioxane. Specific examples of the alcohol compound include methanol, ethanol, 1-propyl alcohol, 2-propyl alcohol, 1-butanol, 2-butanol, tert-butanol, benzyl alcohol, and the like. Examples of the paraffin, isoparaffin, or naphthene-based hydrocarbon include pentane, cyclopentane, isopentane, hexane, isohexane, cyclohexane, methylcyclohexane, ethylcyclohexane, heptane, octane, isooctane, decane, and the like. Specific examples of the crude oil fractionation component include solvent naphtha at various fractionation temperatures and the like. These compounds may be used singly or in combination of a plurality of kinds thereof. Among these compounds, an ether compound, an alcohol compound, and a hydrocarbon compound are more desirable, and an ether compound selected from diethyl ether, dibutyl ether, and tetrahydrofuran is the most preferable from viewpoints of solubility and dispersibility with respect to the components (A) and (B), volatility, odor, and the like.

The content of the component (C) in the coat-forming composition of the present invention is within a range of 250 to 2500 parts by mass, more preferably within a range of 300 to 2000 parts by mass as a desirable range, and still more preferably within a range of 500 to 1500 parts by mass as the most desirable range per 100 parts by mass of the component (A). When the content of the component (C) is within the above range, the coat-forming composition of the present invention can ensure good stability during storage and workability, and can maintain appropriate volatility.

### <Component (D): hydrolysis catalyst>

The component (D) contained in the coat-forming composition of the present invention is a hydrolysis catalyst. The component (D) used in the present invention is a substance for forming a cured coating film by causing the component (A) to undergo a hydrolysis reaction with moisture or the like in the air by inclusion of the component (D) in a catalytic amount in the coat-forming composition. The content of the component (D) in the coat-forming composition of the present invention is not particularly limited, and only needs to be a catalytic amount, but is preferably 0.001 to 20 parts by mass, more preferably within a range of 0.005 to 10 parts by mass as a desirable range, and still more preferably within a range of 0.01 to 5 parts by mass as the most desirable range per 100 parts by mass of the component (A). When the content of the component (D) is within the above range, the coat-forming composition of the present invention can achieve both appropriate reaction activity and stability during storage.

In the present invention, the component (D) can be used by appropriately selecting a conventionally known compound as a catalyst used in a hydrolysis reaction. For example, from among an organic tin compound, an organic zinc compound, an organic titanium compound, an organic zirconium compound, an organic aluminum compound, an organic nickel compound, an inorganic acid compound, an organic acid compound, an inorganic base compound, an organic base compound, and the like, a compound having necessary characteristics can be selected and used from viewpoints of reaction activity, storage stability, a coloring property, and the like. Examples of the organic tin compound include dibutyltin dilaurate, dibutyltin dioctate, dibutyltin diacetate, dioctyltin dilaurate, dioctyltin dioctate, dioctyltin diacetate, dibutyltin bisacetylacetate, dioctyltin bisacetyllaurate, and the like. Examples of the organic zinc compound include zinc triacetylacetonate, zinc-2-ethylhexoate, zinc naphthenate, zinc stearate, and the like. Examples of the organic titanium compound include tetrabutyl titanate, tetranonyl titanate, tetrakis ethylene glycol methyl ether titanate, tetrakis ethylene glycol ethyl ether titanate, bis(acetylacetonyl) dipropyl titanate, and the like. Examples of the organic zirconium compound include zirconium tetraacetylacetonate, zirconium tributoxyacetylacetonate, zirconium dibutoxydiacetylacetonate, zirconium tetranormal propoxide, zirconium tetraisopropoxide, zirconium tetranormal butoxide, zirconium acylate, zirconium tributoxy stearate, zirconium octoate, zirconyl (2-ethylhexanoate), zirconium (2-ethylhexoate), and the like. Examples of the organic aluminum compound include: an aluminum salt compound such as aluminum octylate, aluminum triacetate, or aluminum tristearate; an aluminum alkoxide compound such as aluminum trimethoxide, aluminum triethoxide, aluminum triallyl oxide, or aluminum triphenoxide; an aluminum chelate compound such as aluminum methoxybis(ethylacetoacetate), aluminum methoxybis(acetylacetonate), aluminum ethoxybis(ethylacetoacetate), aluminum ethoxybis(acetylacetonate), aluminum isopropoxybis(ethylacetoacetate), aluminum isopropoxybis(methylacetoacetate), aluminum isopropoxybis(t-butylacetoacetate), aluminum butoxybis(ethylacetoacetate), aluminum dimethoxy (ethylacetoacetate), aluminum dimethoxy (acetylacetonate), aluminum diethoxy (ethylacetoacetate), aluminum diethoxy (acetylacetonate), aluminum diisopropoxy (ethylacetoacetate), aluminum diisopropoxy (methyl acetoacetate), aluminum tris(ethylacetoacetate), aluminum tris(acetylacetonate), or aluminum octyl acetoacetate diisoproprate; and the like. Examples of the organic nickel compound include nickel (II) acetylacetonate, nickel (II) hexafluoroacetylacetonate hydrate, and the like.

Examples of the inorganic acid compound include hydrochloric acid, phosphoric acid, sulfuric acid, hydrofluoric acid, and the like. Examples of the organic acid compound include p-toluenesulfonic acid, oxalic acid, and the like. Examples of the inorganic base compound include ammonia, sodium hydroxide, and the like. Examples of the organic base compound include trimethylamine, triethylamine, tributylamine, 1,5-diazabicyclo [4.3.0] nonene-5 (DBN), 1,8-diazabicyclo [5.4.0] undecene-7 (DBU), and the like. These compounds may be used singly or in combination of a plurality of kinds thereof. In the present invention, the component (D) is preferably an organic base compound, and particularly preferably an amine compound from viewpoints of an influence on a substrate, solubility, a coloring property, and the like.

In addition, to the coat-forming composition of the present invention, an optional addition component can be appropriately added as long as the characteristics of the coat-forming composition are not impaired. For example, an appropriate amount of an additive may be blended. Examples of the additive include a coloring agent such as a pigment or a dye, flame retardant, a plasticizer, an antioxidant, an ultraviolet absorber, an infrared absorber, a fluorescent agent, a fragrance, an antifoaming agent, an adhesion imparting agent such as a silane coupling agent, a surfactant, a leveling agent, a rheology control agent, and the like. By addition of these additives, with respect to the coat-forming composition of the present invention, physical properties such as strength of a cured product of the coat-forming composition, adhesiveness to a substrate, flame retardancy, workability, and the like can be appropriately adjusted, and desired characteristics can be imparted.

The coat-forming composition of the present invention is particularly preferably used as a coating agent. The coating agent can be applied to a substrate such as various metals, glass, ceramics, or a resin. However, application to a surface of an automobile body is the most preferable use from a viewpoint as a substrate that particularly requires water repellency and water slidability. The present invention further relates to a coating film forming method using the coat-forming composition. The coating film forming method of the present invention is not particularly limited. For example, an arbitrary means such as hand coating using a fiber impregnated with the coat-forming composition, brush coating, or mechanical coating using an automatic machine can be appropriately used. In the present invention, application in the following procedures is particularly preferable. That is, an appropriate amount of the coat-forming composition of the present invention is infiltrated into fibers such as a dried sponge or waste cloth, and is spread thinly on a surface of a substrate by hand. A volatile component is volatilized by natural drying or forced drying using a drier or the like. Thereafter, the coated surface is wiped with another dry cloth, microfiber waste cloth, or the like to perform finishing. At this time, a silazane bond (for example, structure of "SiH₂NH" in a case of an inorganic silazane) contained in the reactive component (A) in the coat-forming composition causes a hydrolysis reaction by the following mechanism due to an action of the hydrolysis catalyst as the component (D) to form a cured coating film of a siloxane bond (SiO₂) on the substrate.

- (SiH₂NH)ₙ-+2H₂O→-(SiO₂)ₙ-+NH₃+2H₂

Prior to the above reaction, it is assumed that the component (B) forms a layer of monomolecules arranged on a surface of the substrate to form a hydrophobic film according to the mechanism described in the section of the component (B). This hydrophobic film forms a network complementarily with a coating film of the component (A), and the coating film thereby becomes a denser and stronger film, thus exerting the effect of the present invention. The thickness of the coating film is desirably within a range of about 0.001 to 100 µm, more preferably within a range of 0.01 to 75 µm as a more desirable range, and particularly preferably within a range of 0.1 to 50 µm as the most desirable range. When the thickness is within the above range, good water repellency, water slidability, workability during coating, durability, and aesthetic appearance can be achieved.

By applying the coat-forming composition of the present invention to various substrates and forming a coating film on the substrates, it is possible not only to form a coating layer suitable for an electric/electronic part, a machine part, a transport machine, daily necessities, and the like, having excellent water repellency and water slidability, but also to use the coat-forming composition for various uses such as film formation, three-dimensional object molding, potting, and design formation.

### Examples

Hereinafter, the effect of the present invention will be described in detail with reference to Examples, but these Examples are not intended to limit the embodiments of the present invention.

As raw materials contained in each of coat-forming compositions (hereinafter, also simply referred to as "compositions") prepared in Examples and Comparative Examples, the following raw materials were used.

Component (A): a polysilazane compound
- KiON HTA1500 rapid cure; a product of AZ Electronic Materials, organic polysilazane with a solid content by mass of about 100%
- TRESMILE ANN120-20; a product of AZ Electronic Materials, dibutyl ether solution of inorganic polysilazane with a solid content by mass of 20%

Component (B): a reactive silicone oil having a functional group selected from a carbinol group, an amino group, an epoxy group, and a mercapto group only at one end of a molecular chain, and a comparative substance thereof.
- X-22-170DX: a reactive silicone oil having a carbinol group at one end, functional group equivalent 4700 g/mol, a product of Shin-Etsu Silicone Co., Ltd.
- MCR-A11: a reactive silicone oil having an amino group at one end of a molecular chain, functional group equivalent 350 g/mol, a product of Gelest Inc.
- Mercapto: a reactive silicone oil having a mercapto group at one end of a molecular chain, obtained by mixing 100 g of the above X-22-170DX with 1 liter of a toluene solvent, putting the resulting solution into a flask, adding 12 g of 3-mercaptopropyl dimethylmethoxysilane thereto, stirring the resulting mixture for five minutes, then adding 0.1 g of dihexylamine and 0.1 g of 2-ethylhexanoic acid as a catalyst thereto, stirring the resulting mixture at 60°C for two hours to cause a reaction, returning the temperature to room temperature, then volatilizing the solvent, and further removing impurities by washing for purification.

Component (B')
- X-22-174BX: a reactive silicone oil having a methacrylic group at one end of a molecular chain, functional group equivalent 2300 g/mol, a product of Shin-Etsu Silicone Co., Ltd.
- KF-9701: a reactive silicone oil having silanol groups at both ends of a molecular chain, functional group equivalent 1500 g/mol, a product of Shin-Etsu Silicone Co., Ltd.
- X-22-4039: a reactive silicone oil having a carbinol group in a side chain of a molecular chain, functional group equivalent 1000 g/mol, a product of Shin-Etsu Silicone Co., Ltd.
- KBM-903: 3-aminopropyl trimethoxysilane, a product of Shin-Etsu Silicone Co., Ltd.
- KF-6003: a reactive silicone oil having carbinol groups at both ends of a molecular chain, functional group equivalent 2500 g/mol, a product of Shin-Etsu Silicone Co., Ltd.

Component (C): solvent or diluent
- Dibutyl ether: a product of Tokyo Chemical Industry Co., Ltd.

Component (D): hydrolysis catalyst
- Triethylamine: a product of Daicel Corporation

Each of coat-forming compositions evaluated in Examples and Comparative Examples of the present invention was prepared by the following procedures. That is, in an environment of 25°C and 50% RH, the component (A) and the component (B) or a comparative substance were sequentially put into a glass container filled with the component (C). The component (D) was further added thereto. The resulting mixture was continuously stirred for 10 minute. The glass container containing the resulting product was sealed. The respective contents are illustrated in Table 1.

Characteristics of each of the coat-forming compositions were evaluated under the following conditions.

### [Method for preparing test piece]

Each of the compositions illustrated in Table was infiltrated into tissue paper in such an amount that a half of a surface of the tissue paper became moist (approximately 2 ml), was spread thinly by hand on a black coated plate (material: SPCC-SD, standard: JIS-G-3141, dimensions: 0.8 mm x 70 mm × 150 mm, a plate obtained by coating one surface with Aminoalkyd black after chemical electrodeposition, a product of Asahi-Betechno Co., Ltd.), and was allowed to stand in a room at 25°C for 10 minutes. An excess of the composition was wiped with dry microfiber cloth. The resulting product was allowed to stand in a room at 25°C for 24 hours to perform curing, thus manufacturing a test piece.

### [Water repellency evaluation method]

Onto a surface of each of the test pieces, one drop (about 0.005 ml) of deionized water was dropped with a dropper. A water contact angle with respect to a surface of a substrate at this time was measured using a contact angle meter (DM-500, a product of Kyowa Interface Science Co., Ltd.), and a value of the contact angle was evaluated as an index of water repellency. A desirable contact angle in the coat-forming composition of the present invention is a value of 100° or more, and more preferably a value of 105° or more.

### [Water slidability evaluation method]

Onto a surface of each of the test pieces, one drop (about 0.005 ml) of deionized water was dropped with a dropper. From this state, the test piece was gradually inclined. An angle at which a water drop began to flow (sliding angle) was measured, and a value of the sliding angle was evaluated as an index of water slidability (water sliding property). A desirable sliding angle as water slidability in the coat-forming composition of the present invention is a value of 25° or less, and more preferably a value of 20° or less.

**[Table 1]**

| | | Example 1 | Example 2 | Example 3 | Example 4 | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|---|---|
| Component (A) | HTA1500 Rapid | 1.0 | 1.0 | 1.0 | | 1.0 | 1.0 | 1.0 | 1.0 | 1.0 | 1.0 | 1.0 |
| | ANN120-20 | | | | 5.0 | | | | | | | |
| Component (B) | X-22-170DX | 0.5 | | | | 1.0 | | | | | | |
| | MCR-A11 | | 0.5 | | 0.5 | | | | | | | |
| | Mercapto | | | 0.5 | | | | | | | | |
| Component (B') | X-22-174BX | | | | | | 0.5 | | | | | |
| | KF-9701 | | | | | | | 0.5 | | | | |
| | X-22-4039 | | | | | | | | 0.5 | | | |
| | KBM-903 | | | | | | | | | 0.5 | | |
| | KF-6003 | | | | | | | | | | 0.5 | |
| Component (C) | Dibutyl ether | 10 | 10 | 10 | 6 | 10 | 10 | 10 | 10 | 10 | 10 | 10 |
| Component (D) | Triethylamine | 0.01 | 0.01 | 0.01 | 0.01 | 0.01 | 0.01 | 0.01 | 0.01 | 0.01 | 0.01 | 0.01 |
| Characteristic evaluation | Water repellency (contact angle [°]) | 112.3 | 105.9 | 102.3 | 109.5 | NG | 95.6 | 96.8 | 108.0 | 97.6 | 109.8 | 96.3 |
| | Water slidability (sliding angle [°]) | 11.8 | 17.8 | 15.2 | 24.9 | NG | 39.0 | 39.0 | 33.4 | 48.0 | 28.8 | 45.4 |

"NG": It was confirmed that a surface of the test piece prepared under the above conditions remained tacky by finger touch.

From the results in Table 1, it has been confirmed that each of the composition of Examples 1 to 4 containing the components of the present invention at a predetermined composition ratio has good water repellency and water slidability, that is, a large contact angle value and a small sliding angle value. Here, it has been recognized that the composition of Example 1 which is a one end reactive silicone oil having a carbinol group as the component (B) has particularly excellent characteristics in both water repellency and water slidability. Meanwhile, it has been recognized that a composition in which the component (A) is an inorganic polysilazane has slightly poor water slidability. In addition, in Comparative Example 1 in which the content of the component (B) with respect to the component (A) exceeded the specific range of the present invention, an appropriate cured product could not be formed, and the composition was not suitable as a coating film for coating. Therefore, the composition could not be evaluated. Furthermore, it has been confirmed that Comparative Examples 2 to 6 which are compositions using a compound having a structure not included in the technical scope of the present invention as the component (B), and Comparative Example 7 which is a composition not containing the component have poorer water repellency and water slidability as compared with the composition included in the technical scope of the present invention.

From the results of the above evaluation, it has been confirmed that the coat-forming composition of the present invention has excellent water repellency and water slidability, and therefore has sufficient characteristics required for use in coating.

### Industrial Applicability

The coat-forming composition of the present invention has excellent water repellency, water slidability, and adhesiveness, and is useful because the coat-forming composition can be suitably used for forming a coating layer that imparts characteristics such as water repellency and water slidability to a substrate such as various metal steel sheets, a coated metal steel sheet, glass, ceramics, or a resin.

## Claims

1. A coat-forming composition comprising:
per 100 parts by mass of component (A): a polysilazane compound,
10 to 90 parts by mass of component (B): a reactive silicone oil having a functional group selected from a carbinol group, an amino group, an epoxy group, and a mercapto group only at one end of a molecular chain;
250 to 2500 parts by mass of component (C): a solvent or a diluent; and
a catalytic amount of component (D): a hydrolysis catalyst.

2. The coat-forming composition according to claim 1, wherein the functional group of the component (B) is a carbinol group.

3. The coat-forming composition according to claim 1 or 2, wherein the component (D) contains an amine compound.

4. The coat-forming composition according to any one of claims 1 to 3, wherein the component (A) contains an organic polysilazane.

5. A coating agent comprising the coat-forming composition according to any one of claims 1 to 4.

6. A coating film forming method comprising: applying the coat-forming composition according to any one of claims 1 to 4 to a surface of a substrate; and curing the coat-forming composition on the substrate by a hydrolysis reaction.
